# EUROPEAN PATENT APPLICATION

(11) **EP 4 219 111 A1**
(43) Date of publication of application: **02.08.2023**
(21) Application number: 23154439.6
(22) Date of filing: 01.02.2023
(51) Int. Cl.: B29B 7/24, B29B 7/28, B29B 7/74, B29B 7/82, B29B 7/86, B29C 48/285, B29B 13/06, F26B 17/00, F26B 21/00, B29B 7/14, B29B 7/16, B29B 7/60

(54) **PRODUCTION APPARATUS AND PROCESS FOR POLYMER-BASED ARTICLES**

(30) Priority: 01.02.2022 IT 202200001709
(71) Applicant: Pegaso Industries S.p.A., 35010 Borgoricco (PD) (IT)
(72) Inventor: PIVA, Rinaldo, 35010 Borgoricco (PD) (IT); ZANON, Daniele, 35010 Borgoricco (PD) (IT)
(74) Representative: Susanetto, Carlo

(57) **Abstract**

A production apparatus (1) for polymer-based articles, particularly for producing soles of footwear items, comprises:
- a weighing and mixing unit (10) which is configured to prepare at least one polymer blend;
- a plurality of supply hoppers (8), each of which is configured to receive from the weighing and mixing unit (10) the at least one polymer blend; and
- a plurality of transforming machines (2) which are configured to transform the polymer blend which is received from the respective supply hopper (8) into a polymer-based article.

## Description

### Technical field

The present invention relates to a production apparatus for polymer-based articles and a related production process.

The invention is particularly, though not exclusively, used in the field of production of footwear items or components thereof, such as, for example, the soles.

### Technological background

In the technical field set out above, it is widely known to produce articles made from polymer material using suitable transforming machines which provide for the formation of the desired article from a polymer blend which is suitably prepared.

For example, in a method of injection-moulding which is commonly used, the transforming machines which are supplied by a polymer blend, which is supplied in granular form, provide in a first step for bringing the polymer blend to the molten or semi-molten state, for example, inside an extruder, and then for injecting it inside a mould having the form of the desired article, where it is solidified thus obtaining the final article.

Alternatively, the polymer blend in the molten or semi-molten state can be caused to pass through an extrusion head having a predefined profile which, in this case, also confers on the molten or semi-molten material the desired shape of the article to be obtained.

In a production plant for polymer-based articles, it is further known to have available a plurality of transforming machines and to operate these machines independently of each other so as to allow the simultaneous production of articles which are obtained from different polymer blends.

These blends are configured in order to confer on the final product chemical/physical or mechanical characteristics which are adequate for the purposes intended for the use thereof and can provide for the combination of a consistent number of materials, including one or more polymer materials and one or more additives which can be both of an organic nature and of an inorganic nature.

In general terms, these materials can differ from each other as a result of any characteristic thereof, such as, for example, the chemical composition or the form thereof or the degree of purity thereof or the origin thereof.

By way of example, the materials to be mixed may be one or more granular polymers, a mineral filler and one or more additives, such as a stabilizing compound, an antioxidant compound or a colouring compound.

Furthermore, the polymers to be mixed may be of the same type, for example, TPU or EVA, but may have different origins, such as, for example, virgin material or recycled material or may have different characteristics, for example, in terms of Shore hardness.

The polymer blends are generally prepared in a weighing and mixing unit, where the different materials are charged in accordance with the intended quantities required by a respective recipe which defines the precise relationship between the different materials of each polymer blend and are therefore mixed with each other in a virtually homogeneous manner before being supplied to the transforming machine.

Furthermore, the materials which form the polymer blends can be heated or, where necessary, dehumidified before being mixed with each other and supplied to the transforming machine.

In this context, the Applicant has observed that in the known production plants each transforming machine is served by a respective weighing and mixing unit which provides for preparing the polymer blends and supplying them directly to the machine.

However, this configuration of the installation involves a substantial complication in terms of the plant because it requires, for each material which may potentially be used in any recipe of a polymer blend, a charging line which connects a storage tank for the material to each weighing and mixing unit which is placed upstream of a respective transforming machine.

Therefore, the Applicant has felt the need for optimizing the structure of the known plants in order to improve the management thereof and to reduce the overall costs thereof. In the present description and the appended claims, the term "granular material" is intended to be understood to be a plurality of solid elements which are different and separate from each other, having suitable dimensions and formations in accordance with the processing to be carried out and the material used, including the powdered or flaked polymer material.

The blend is based on polymer material when at least 40% of the material of the blend is formed by one or more polymer materials, preferably at least 60%. The polymer material may be any material which is suitable for and normally used in processing operations for plastics materials. Preferably, it is a thermoplastic material, such as, for example, polyolefins, polyurethanes, polyesters, polyamides or the copolymers thereof. Preferred examples of polymer materials are ethylene vinyl acetate (EVA) copolymer and thermoplastic polyurethane (TPU).

### Description of the invention

The problem addressed by the present invention is to provide a production apparatus and process for polymer-based articles which is structurally and functionally configured to at least partially overcome one or more of the disadvantages set out above with reference to the cited prior art.

This problem is solved by the present invention by means of a production apparatus and process which are realized according to the appended claims. In a first aspect thereof, the present invention particularly relates to a production apparatus for polymer-based articles.

Preferably, the apparatus comprises a weighing and mixing unit which is configured to prepare at least one polymer blend.

Preferably, the apparatus comprises a plurality of supply hoppers which are all connected to the weighing and mixing unit.

Preferably, each supply hopper is configured to receive from the weighing and mixing unit the at least one polymer blend.

Preferably, the apparatus comprises a plurality of transforming machines. Preferably, each transforming machine is supplied by one of the plurality of supply hoppers.

Preferably, each transforming machine is configured to transform the at least one polymer blend which is received from the supply hopper into one of the polymer-based articles.

In a second aspect thereof, the present invention is directed towards a production process for polymer-based articles.

This process preferably comprises the step of providing a weighing and mixing unit which is connected downstream to a plurality of transforming machines. Preferably, each transforming machine is configured to transform at least one polymer blend into one of the polymer-based articles.

Preferably, this process comprises the step of associating a respective polymer blend with each transforming machine.

Preferably, this process comprises the step of forming a first polymer blend in the weighing and mixing unit.

Preferably, this process comprises the step of moving the first polymer blend into at least a first transforming machine, with which the first polymer blend is associated.

Preferably, this process comprises the step of operating the at least one first transforming machine in order to obtain a first of these articles.

Preferably, this process comprises the step of forming a second polymer blend in the weighing and mixing unit.

Preferably, the second polymer blend is different from the first polymer blend. Preferably, this process comprises the step of moving the second polymer blend into at least one second transforming machine, with which the second polymer blend is associated.

Preferably, this process comprises the step of operating the at least one second transforming machine in order to obtain a second of these articles.

Preferably, the at least one second transforming machine is operated in parallel, that is to say, simultaneously, with the first transforming machine.

As a result of these characteristics, the apparatus and the process of the present invention are capable of preparing a polymer blend for each transforming machine by using in a suitable manner a single weighing and mixing unit which is capable of forming different polymer blends and of conveying it from time to time to the transforming machine which is operating with that specific polymer blend.

A substantial saving of plant component parts is thereby achieved because a single weighing and mixing unit supplies a plurality of transforming machines which can advantageously operate in a parallel manner. In fact, it is thereby possible with a single weighing and mixing unit to supply two or more transforming machines which simultaneously produce articles which are composed by different polymer blends. Furthermore, the efficiency of the plant is increased because the weighing and mixing unit is used for a high portion of the time while, in the configuration with one unit for each transforming machine, the time of use was inevitably greatly reduced.

In at least one of the aspects set out above, the present invention may have at least one of the preferred features described below.

In one embodiment, the apparatus comprises a plurality of storage tanks, wherein each tank contains a respective material which forms a component of the at least one polymer blend.

Preferably, the weighing and mixing unit is connected to the plurality of storage tanks in order to prepare the at least one polymer blend from the materials which are contained in the plurality of storage tanks.

Preferably, the weighing and mixing unit is connected to each storage tank by means of a respective charging line.

Preferably, the materials are of the granular type and the respective charging lines are configured to carry out a pneumatic transport of the materials from the storage tanks to the weighing and mixing unit.

Preferably, the respective charging line comprises a separation device, more preferably a filter, which is positioned upstream of the weighing and mixing unit. Preferably, all the charging lines which are dedicated to the pneumatic transport of the materials of the different storage tanks are connected to the same vacuum pump.

The storage tanks have suitable dimensions and are provided in suitable numbers in accordance with the polymer blends to be prepared for the production of the desired articles, for example, four or six.

Preferably, the weighing and mixing unit comprises a weighing hopper, in which the materials from the storage tanks are introduced and a mixing hopper which is positioned downstream of the weighing hopper.

Preferably, the weighing hopper is supported on load cells.

Preferably, the mixing hopper is provided with a mixing member which is configured to mix the materials which are contained in the mixing hopper. Preferably, the weighing and mixing unit comprises a selector device which is positioned downstream of the mixing hopper, more preferably under the mixing hopper.

Preferably, the selector device is positioned immediately downstream of the mixing hopper without additional hoppers or tanks between the selector device and the mixing hopper.

Preferably, the selector device is configured to place the outlet of the mixing hopper in communication with a supply hopper which is selected from the plurality of supply hoppers.

Preferably, each supply hopper is positioned above the respective transforming machine.

Preferably, each supply hopper is provided with a sensor which controls the quantity of polymer blend present therein, for example, a level sensor or weight sensor.

In one embodiment, a polymer blend is prepared in the weighing and mixing unit when the quantity of the polymer blend present inside the respective supply hopper is less than a predefined threshold.

Preferably, the supply hoppers are connected to at least one heating circuit which is configured to introduce a hot gas inside the supply hoppers in order to heat the polymer blend before being supplied to the transforming machine.

In this manner, the polymer blend is advantageously brought to a temperature near the melting temperature obtained in the transforming machine. Preferably, the at least one heating circuit is configured to introduce a hot gas inside a plurality of the supply hoppers.

In some embodiments, the at least one heating circuit comprises a dehumidifying device which is configured to dehumidify the gas before it is introduced into the at least one supply hopper.

In this manner, the polymer blend in the supply hopper is dried before being introduced into the transforming machine.

This provision is particularly advantageous if one or more materials of the polymer blend is/are hygroscopic.

The transforming machine is preferably an injection-moulding machine or an extruder.

The articles are preferably soles of footwear items.

### Brief description of the drawings

The features and advantages of the invention will be better understood from the detailed description of a preferred embodiment thereof which is illustrated by way of non-limiting example with reference to the appended drawings, in which:

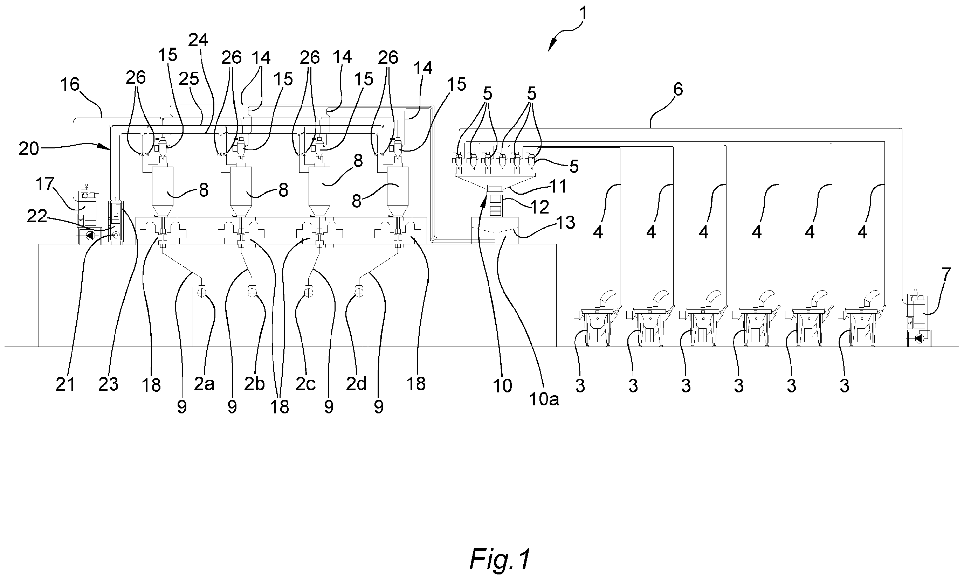

- Figure 1 is a schematic view of a production apparatus for polymer-based articles which is realized according to the present invention;

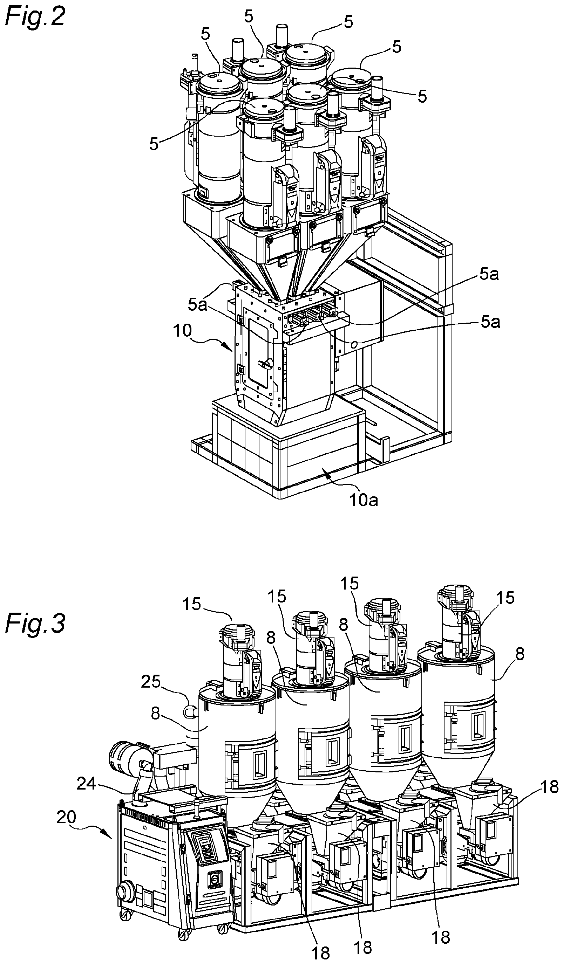

- Figure 2 is a schematic perspective plan view of a component of the production apparatus of Figure 1,
- Figure 3 is a schematic perspective plan view of an additional component of the production apparatus of Figure 1.

### Preferred embodiment of the invention

With reference to the appended Figures, there is generally designated 1 a production apparatus for polymer-based articles which is constructed according to the present invention.

The apparatus 1 is provided to produce soles for footwear and it is particularly provided to simultaneously produce different soles both in terms of form and dimensions and in terms of composition of the polymer blend from which they are produced.

To this end, the apparatus 1 comprises four transforming machines 2a, 2b, 2c, 2d which are generally designated 2 in the remainder of the description, in particular of the injection-moulding type, and which operate substantially independently of each other.

As a function of the production requirements, therefore, the transforming machines 2 can produce articles from the same polymer blend or can produce articles from different polymer blends, for instance each transforming machine can operate with a different polymer blend from the others.

Each transforming machine 2 is supplied by a respective supply hopper 8 which is positioned above the transforming machine 2 so as to supply the polymer blend to the transforming machine 2 by gravitational force through a discharge pipe 9.

All the polymer blends which can be used in the transforming machines 2 are constructed from materials which are contained in suitable storage tanks 3. The storage tanks 3 may differ as a result of the form and dimensions and, in the preferred embodiment considered here, there are six of them.

The materials contained in the storage tanks 3 are of the granular type with chemical/physical characteristics which are different from each other and are, for example, granules of virgin polymer materials or recycled polymer materials or granules of additive materials.

The apparatus 1 further comprises a weighing and mixing unit 10 which is configured to prepare a plurality of polymer blends from the materials which are contained in the storage tanks 3.

The passage of the materials which are contained in the storage tanks 3 to the weighing and mixing unit 10 is brought about by means of a first pneumatic transport circuit.

In particular, each storage tank 3 is connected to a weighing and mixing unit 10 by means of a respective charging line 4 which opens, at the weighing and mixing unit 10, in a respective container 5 where, also as a result of the provision of a filter at the outlet of the container, the material which is transported in the charging line 4 is separated and is caused to fall into the weighing and mixing unit 10.

Downstream of the respective container 5, the charging lines 4 are all connected by means of respective shutoff valves to a first intake line 6, which is in turn connected to a first vacuum pump 7.

The weighing and mixing unit 10 is of the gravimetric type and comprises a weighing hopper 11 which is configured to receive and weigh the material which is released from time to time by one of the containers 5. To this end, the weighing hopper 11 is supported on load cells 12 so as to allow the precise measurement of the quantity of material introduced into the weighing hopper 11.

The weighing and mixing unit 10 further comprises a mixing hopper 13, which is positioned downstream of the weighing hopper 11 and which is provided with a mixing member, for example, of the type with vanes or the type with a screw, which is configured to mix in a substantially homogeneous manner the different materials which are contained in the mixing hopper 13.

The weighing and mixing unit 10 is connected downstream of the mixing hopper 13 to each supply hopper 8 so as to be able to move, by means of a second pneumatic transport circuit, the polymer blend which is prepared in the weighing and mixing unit 10 in the region of the transforming machines 2.

In particular, there is provided at the outlet of the mixing hopper 13 a selector device 10a which is positioned immediately under the mixing hopper 13 which places in connection the outlet of the mixing hopper 13 with a transport line 14 which is connected to a respective supply hopper 8.

Therefore, there are provided the same number of transport lines 14 as there are supply hoppers 8. At the supply hopper 8, each transport line 14 opens in a container 15 where the polymer blend, also as a result of the provision of a suitable filter, is separated from the transport gas and caused to fall into the respective supply hopper 8.

Downstream of the respective container 15, the transport lines 14 are all connected by means of respective shutoff valves to a second intake line 16 which is in turn connected to a second vacuum pump 17.

Each supply hopper 8 is preferably provided with a sensor which controls the quantity of polymer blend which is present inside the supply hopper 8, for example, a level sensor.

Furthermore, each supply hopper 8 is connected to a heating and drying circuit 20 which is configured to introduce, if required, a hot and dry gas inside the supply hopper 8 in order to heat and dry the polymer blend before it is supplied to the transforming machine 2.

To this end, the heating and drying circuit 20 comprises a fan 21, a dehumidifying device 22 and a heater 23, and a supply line 24 and a return line 25 which are both selectively connected to each supply hopper 8 by means of shutoff valves 26.

In the discharge pipe 9 of each supply hopper 8, there is further mounted a metering device 18 which is provided to meter one or more additives in the polymer blend being introduced into the transforming machine, for example, colourants and/or stabilizers.

The gravimetric metering device 1 further comprises a control unit (not illustrated) which is suitably programmed to receive instructions concerning the polymer blends to be composed for each transforming machine 2 and to control the operation of all the components of the apparatus 1, which operates in the manners described below.

Beforehand, there are inserted or stored in the control unit the different polymer blends which can be used by the transforming machines 2 in order to obtain the soles desired and there is associated with each transforming machine 2 a polymer blend.

For example, a first polymer blend may be associated with a first transforming machine 2a, a second polymer blend (which is different from the first polymer blend) may be associated with a second transforming machine 2b while a third polymer blend (which is different from the first and second polymer blends) may be associated with the third and fourth transforming machines 2c, 2d.

At this point, the control unit controls the preparation of the first polymer blend in the weighing and mixing unit 10. To this end, the pneumatic transport of the individual components of the first polymer blend to the weighing and mixing unit 10 by activating the first vacuum pump 7 and opening the charging line 4 corresponding to the storage tank 3 which contains the material to be transported. The material is separated in the region of the container 5 and is discharged, for example, by means of suitable metering valves 5a, into the weighing hopper 11. The material which is introduced into the weighing hopper 11 is weighed by the load cells 12 and, once the intended quantity is reached, the control unit interrupts the further addition of material and controls the discharge of the contents of the weighing hopper 11 into the mixing hopper 13 underneath.

The same weighing procedure is carried out for each additional material which composes the first polymer blend and which is therefore taken from the specific storage tank 3 in order to be charged in the container 5 of the respective charging line 4, weighed in the weighing hopper 11 and added to the mixing hopper 13, where it is mixed with the other materials which compose the first polymer blend.

Once the formation of the first polymer blend is complete, the second pneumatic transport circuit is activated by positioning the selector device 10a in the region of the transport line 14 which connects the weighing and mixing unit 10 to the supply hopper 8 of the first transforming machine 2a, to which the first polymer blend has to be transferred.

The first polymer blend, which is separated in the container 15, is discharged into the supply hopper 8 and here, if necessary, it is heated and dried by the hot and dry gas which is introduced into the supply hopper 8 by the heating and drying circuit 20.

The first polymer blend, once the temperature and drying conditions intended have been reached, is supplied to the first transforming machine 2a by means of the discharge pipe 9, where one or more additional additives which are supplied by the metering device 18 is/are further added to the first polymer blend, if provided.

The first polymer blend is therefore molten and moulded in the transforming machine 2a in order to obtain a first type of sole for footwear items.

In the meantime, as soon as the discharge of the first polymer blend from the mixing hopper 13 has been terminated, the weighing and mixing unit 10 provides for forming the second polymer blend with a procedure which is similar to the one used in the preparation of the first polymer blend. The selector device 10a is therefore positioned on the transport line 14 which connects the weighing and mixing unit 10 to the supply hopper 8 of the second transforming machine 2b so that, once it is prepared, the second polymer blend is transported to the supply hopper 8 of the second transforming machine 2b. Here, after possible heating and drying, it is supplied to the second transforming machine 2b which provides for the transformation thereof into a second type of sole for footwear items.

In a generally similar manner, therefore, the third polymer blend which is transported to the respective supply hoppers 8 of the third and the fourth transforming machines 2c and 2d is prepared by positioning the selector device 10a in a suitable manner.

When the quantity of polymer blend (first, second or third) inside a supply hopper 8 decreases until reaching a predefined minimum value, the control unit on the basis of the signal from the level sensor controls the preparation of the polymer blend necessary to refill the supply hopper 8.

As a result of the apparatus 1, therefore, it is possible to produce soles with different compositions by efficiently using a single weighing and mixing unit 10 which is capable of efficiently serving a plurality of transforming machines 2 which operate at the same time.

Furthermore, the configuration of the apparatus defined by the present invention significantly reduces the costs of acquisition and management of the installation, maintaining a high level of operational flexibility.

The person skilled in the art will know how to apply suitable variants to the present invention as a function of any specific requirements, all being included within the scope of protection defined by the appended claims.

## Claims

1. A production apparatus (1) for polymer-based articles, particularly for producing soles of footwear items, comprising:
- a weighing and mixing unit (10) which is configured to prepare at least one polymer blend;
- a plurality of supply hoppers (8) which are all connected to the weighing and mixing unit (10), each supply hopper (8) being configured to receive from the weighing and mixing unit (10) the at least one polymer blend;
- a plurality of transforming machines (2), wherein each transforming machine (2) is supplied by one of the plurality of supply hoppers (8) and is configured to transform the at least one polymer blend which is received from the supply hopper (8) into one of the polymer-based articles.

2. An apparatus according to claim 1, comprising a plurality of storage tanks (3), wherein each tank (3) contains a respective material which forms a component of the at least one polymer blend and the weighing and mixing unit (10) is connected to the plurality of storage tanks (3) in order to prepare the at least one polymer blend from the materials which are contained in the plurality of storage tanks (3).

3. An apparatus according to claim 2, wherein the weighing and mixing unit (10) is connected to each storage tank (3) by means of a respective charging line (4) which is configured to carry out a pneumatic transport of the materials from the storage tanks (3) to the weighing and mixing unit (10).

4. An apparatus according to any one of the preceding claims, wherein the weighing and mixing unit (10) comprises a weighing hopper (11) which is supported on load cells (12) and in which the materials from the storage tanks (3) are introduced.

5. An apparatus according to any one of the preceding claims, wherein the weighing and mixing unit (10) comprises a selector device (10a) which is configured to place the weighing and mixing unit (10) in communication with a supply hopper (8) which is selected from the plurality of supply hoppers.

6. An apparatus according to any one of the preceding claims, wherein the supply hoppers (8) are connected to at least one heating circuit (20) which is configured to introduce a hot gas inside the supply hoppers (8) in order to heat the polymer blend before being supplied to the transforming machine (2).

7. An apparatus according to claim 6, wherein the at least one heating circuit (20) is configured to introduce a hot gas inside a plurality of the supply hoppers (8).

8. An apparatus according to claim 6 or 7, wherein the at least one heating circuit (20) comprises a dehumidifying device (22) which is configured to dehumidify the gas before it is introduced into the at least one supply hopper (8) so as to dry the polymer blend before being supplied to the transforming machine (2).

9. A production process for polymer-based articles, in particular soles for footwear items, comprising:
- providing a weighing and mixing unit (10) which is connected downstream to a plurality of transforming machines (2), wherein each transforming machine (2) is configured to transform at least one polymer blend into one of the polymer-based articles,
- associating a respective polymer blend with each transforming machine (2),
- forming a first polymer blend in the weighing and mixing unit (10),
- moving the first polymer blend into at least a first transforming machine (2a), with which the first polymer blend is associated,
- operating the at least one first transforming machine (2a) in order to obtain a first of these articles,
- forming a second polymer blend which is different from the first polymer blend in the weighing and mixing unit (10),
- moving the second polymer blend into at least one second transforming machine (2b), with which the second polymer blend is associated,
- operating the at least one second transforming machine (2b) in order to obtain a second of these articles.

10. A process according to claim 9, wherein the weighing and mixing unit (10) is connected upstream to a plurality of storage tanks (3), each storage tank (3) containing a material which forms a component of at least one polymer blend and the first polymer blend and the second polymer blend are formed by moving respective quantities of material from at least two of the storage tanks (3) into the weighing and mixing unit (10).

11. A process according to claim 9 or 10, wherein the polymer blends are heated, before being supplied to a respective transforming machine (2), in a respective supply hopper (8) which is provided to supply the transforming machine (2).

12. A process according to any one of claims 9 to 11, wherein the request to form one of the polymer blends is controlled by the quantity of polymer blend present inside the respective supply hopper (8).
